# EUROPÄISCHE PATENTSCHRIFT

(11) **EP 2 302 526 B1**
(45) Veröffentlichungstag und Bekanntmachung des Hinweises auf die Patenterteilung: **26.12.2018**
(21) Anmeldenummer: 10180597.6
(22) Anmeldetag: 28.09.2010
(51) Int. Cl.: G06F 17/15, G06F 17/10, G06F 9/50

(54) **VERFAHREN ZUR VERTEILUNG DER RECHENLAST IN DATENVERARBEITUNGSEINRICHTUNGEN BEI EINER DURCHFÜHRUNG VON BLOCKBASIERTEN RECHENVORSCHRIFTEN**
METHOD FOR DISTRIBUTING CPU LOAD IN DATA PROCESSING DEVICES WHEN EXECUTING BLOCK-BASED COMPUTATION PROCESSES
PROCÉDÉ DE RÉPARTITION DE LA CHARGE DE CALCUL DANS DES DISPOSITIFS DE TRAITEMENT DE DONNÉES LORS DE L'EXÉCUTION DE CALCULS PAR BLOCS

(30) Priorität: 29.09.2009 DE 102009045094; 18.02.2010 DE 102010002111
(43) Veröffentlichungstag der Anmeldung: 30.03.2011
(73) Patentinhaber: Native Instruments GmbH, 10997 Berlin (DE)
(72) Erfinder: Le Goff, Mickael, 10997 Berlin (DE); Noppeney, Dennis, 50859, Köln (DE)
(74) Vertreter: Gulde & Partner

(56) Entgegenhaltungen:
- US-A1- 2003 046 637
- GARDNER W G: "EFFICIENT CONVOLUTION WITHOUT INPUT-OUTPUT DELAY", JOURNAL OF THE AUDIO ENGINEERING SOCIETY, AUDIO ENGINEERING SOCIETY, NEW YORK, NY, US, Bd. 43, Nr. 3, 1. März 1995 (1995-03-01), Seiten 127-135, XP000730158, ISSN: 1549-4950
- GUILLERMO GARCÍA: "Optimal Filter Partition for Efficient Convolution with Short Input/Output Delay", 113TH AES CONVENTION, 5. Oktober 2002 (2002-10-05), Seiten 1-9, XP055080918, Los Angeles, CA, USA
- M Fink ET AL: "Load-Balanced Implementation of a Delayless Partitioned Block Frequency-Domain Adaptive Filter", GI-Jahrestagung, volume 220 of LNI, 16 September 2013 (2013-09-16), pages 2868-2879, XP055261286, Retrieved from the Internet: URL:https://pdfs.semanticscholar.org/1f26/ c437d657fe41300e4dc44373b44e7230cca4.pdf [retrieved on 2016-03-29]

## Beschreibung

Die Erfindung betrifft ein Verfahren und eine Anordnung zur Verteilung der Rechenlast in Datenverarbeitungseinrichtungen bei einer Durchführung von blockbasierten Rechenvorschriften sowie ein entsprechendes Computerprogramm und ein entsprechendes computerlesbares Speichermedium, welche einsetzbar sind, um die in Prozessoren anfallende Rechenlast für periodisch anfallende Rechenoperationen gleichmäßig zu verteilen. Ein spezielles Einsatzgebiet liegt im Bereich der digitalen Verarbeitung von Multimediasignalen, wie insbesondere von Audiosignalen, von Videosignalen oder dergleichen.

Das hier beschriebene Verfahren lässt sich unter anderem zur Berechnung der zeitdiskreten Faltung einsetzen, welche aufgrund ihrer Vielseitigkeit eine große Bedeutung auf dem Gebiet der digitalen Verarbeitung von Audio-Signalen erlangt hat. Mit ihr lassen sich beliebige lineare und zeitunabhängige Systeme beliebiger Komplexität implementieren, indem die Impulsantwort des Systems mit dem Audiosignal mathematisch verknüpft wird. Insbesondere bei der Simulation des Nachhalls von Räumen spielt die zeitdiskrete Faltung eine große Rolle, da Nachhall aufgrund seiner Komplexität schwierig und aufwendig zu modellieren ist und man die Impulsantwort eines Raumes vergleichsweise einfach gewinnen kann. Impulsantworten von Räumen können mitunter sehr lang sein, was die zeitdiskrete Faltung zu einer sehr rechenintensiven Operation macht.

Aus der Definition der Faltungsoperation ergibt sich direkt eine Rechenvorschrift, die im Zeitbereich auf das Eingangssignal angewandt werden kann. Der Aufwand zur Berechnung der zeitdiskreten Faltung skaliert dabei linear mit der Länge der Impulsantwort. Das führt dazu, dass die zeitdiskrete Faltung für lange Impulsantworten, abhängig von der Leistung des dafür verwendeten Prozessors, oft nicht mehr in Echtzeit zu berechnen ist.

Eine effizientere Möglichkeit zur Berechnung der Faltung ist die sogenannte schnelle Faltung. Diese basiert auf der Äquivalenz von Faltung im Zeitbereich und Multiplikation im Frequenzbereich. Demnach werden Impulsantwort und Audiosignal in den Frequenzbereich transformiert, dort miteinander multipliziert und das Ergebnis in den Zeitbereich zurück transformiert. Mithilfe der schnellen Fouriertransformation (FFT - Fast Fourier Transform) kann der Berechnungsaufwand deutlich gesenkt werden, denn dieser skaliert nun nicht mehr linear, sondern nur noch etwa logarithmisch mit der Länge der Impulsantwort. Da für die schnelle Faltung das gesamte Audiosignal vorliegen muss, bevor mit der Transformation begonnen werden kann, ist die schnelle Faltung in der beschriebenen Form nicht für die Echtzeitberechnung geeignet.

Aus der Publikation Kulp, Barry D.: "Digital Equalization Using Fourier Transform Techniques", 85th AES Convention, Paper Number 2694; 1988, sind weitere Verfahren bekannt, nach denen Impulsantwort und Audiosignal in mehrere Blöcke zerlegt werden können, um so eine abschnittsweise schnelle Faltung durchzuführen. Die Faltung mit einem Abschnitt der Impulsantwort wird im Folgenden "Abschnittsfaltung" genannt. Durch geschickte Wahl des Zerlegungsschemas lässt sich die zeitdiskrete Faltung sehr effizient in Echtzeit berechnen.

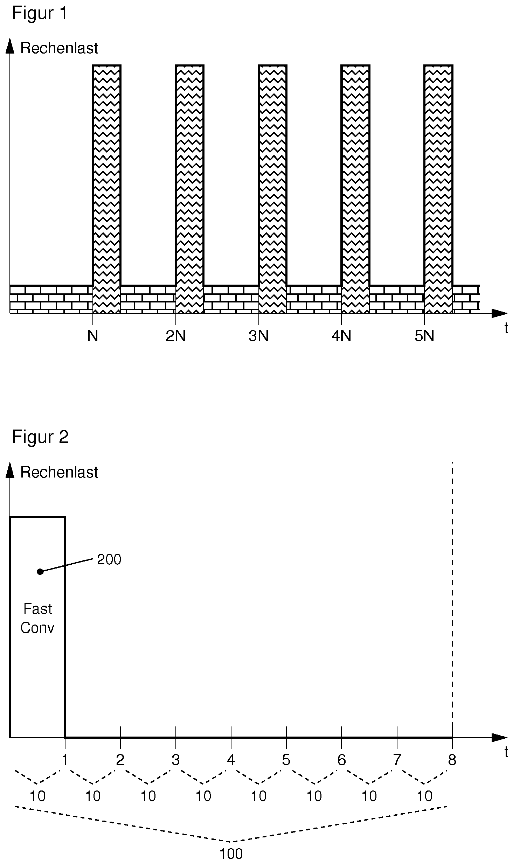

Nachteilig ist bei diesem Verfahren die Verteilung der Rechenlast. Wie Figur 1 zeigt, wechseln sich bei diesem Verfahren "Ein- und Ausgabephasen" (Mauerschraffur) und "Berechnungsphasen" (Wellenschraffur) ab. Während der Ein- und Ausgabephasen werden Abtastwerte aus dem Eingangssignalstrom für die kommende Berechnungsphase gesammelt und der Ausgangssignalstrom mit dem Ergebnis der vergangenen Berechnungsphase gefüllt. Die nächste Berechnungsphase beginnt immer dann, wenn N Abtastwerte gesammelt wurden und damit eine weitere FFT mit der Blockgröße 2*N möglich ist. (Bei den Verfahren Overlap-Add und Overlap-Save muss die FFT-Länge doppelt so groß sein wie die Blockgröße der einzelnen Zeitabschnitte.)

Eine Lastverteilung dieser Art ist für die Echtzeitverarbeitung sehr ungünstig, denn die Rechenleistung des ausführenden Systems muss so dimensioniert werden, dass das System in den Berechnungsphasen nicht überlastet ist. Das führt dazu, dass die Rechenleistung deutlich höher sein muss, als es bei einer gleichmäßigen Auslastung des Systems der Fall wäre.

Zur besseren Lastverteilung ist aus der Publikation Gardner, William G.: "Efficient Convolution without Input-Output Delay", JAES Volume 43 Issue 3 pp. 127-136; March 1995, ein Verfahren bekannt, das die Berechnung der verschiedenen Abschnittsfaltungen asynchron zu der Verarbeitung des Eingangs- und Ausgangssignalstroms ausführt. Dadurch werden die Ein- und Ausgabephasen von den Berechnungsphasen getrennt. Da aber die Ein- und Ausgabephasen auf die Ergebnisse der Berechnungsphasen angewiesen sind, muss trotz asynchroner Berechnung zu gewissen Zeitpunkten eine Synchronisierung durchgeführt werden, um zu gewährleisten, dass die auszugebenden Abtastwerte zum Ausgabezeitpunkt vollständig berechnet sind. Eine solche Synchronisierung kann mitunter zeitaufwendig sein, und ist oft mit den Rahmenbedingungen, unter denen das Verfahren ausgeführt wird, nicht kompatibel. Wird das Verfahren beispielsweise auf einem Computer mit einem Multithreading-Betriebssystem ausgeführt, so darf der Echtzeit-Thread auf keinen Fall auf einen anderen Thread warten, weil dadurch die Echtzeitfähigkeit des Systems nicht mehr gewährleistet werden kann. Insbesondere unterliegt in diesem Fall die Verteilung der Rechenkapazitäten dem Betriebssystem und kann durch die Implementierung des Verfahrens nicht beeinflusst werden. Außerdem werden nach diesem Verfahren lediglich die Berechnungsphasen verschiedener Abschnittsfaltungen zeitlich miteinander verschränkt. Insbesondere für Anordnungen mit wenigen Abschnittsfaltungen führt das Verfahren nicht zu einer optimalen Ausnutzung der verfügbaren Rechenkapazität.

In der Veröffentlichung US 2003/004663 A1 wird ein Verfahren für eine gleichmäßige Verteilung der Rechenlast bei blockbasierten Algorithmen beschrieben. Ein Decoder empfängt eine Folge von Datenblöcken als Eingangswerte. Eine bestimmte Anzahl von Blöcken bilden dabei ein Codewort, welches durch eine Folge von Dekodierungsschritten dekodiert werden muss. Für jeden Schritt wird dabei ein spezieller Algorithmus genutzt, wobei die Schritte in zeitlicher Abfolge nacheinander abgearbeitet werden. Gemäß US 2003/004663 A1 wird jeder Algorithmus in eine Anzahl von Unterschritten unterteilt, die der Anzahl von Blöcken entspricht, die ein Codewort bilden. Jedes Mal, wenn ein neuer Block eines Codeworts empfangen wird, wird ein Unterschritt der Dekodierungsschritte für schon empfangene Codewörter abgearbeitet. Im Ergebnis wird eine gleichmäßige Rechenlast erzeugt, wobei ein Block die kleinste Einheit ist, die dabei betrachtet wird. Die Verteilung der Rechenlast innerhalb eines Blocks wird nicht betrachtet. Da pro eingehendem Block nur ein Unterschritt abgearbeitet wird, beträgt die Gesamtverzögerung in einem solchen System das X-fache eines Codeworts, wobei X die Anzahl der Dekodierungsschritte angibt. In Echtzeitsystemen ist gerade die Verzögerung ein wesentlicher Faktor, der möglichst minimiert werden soll. Eine solche Minimierung der Verzögerung wird durch die in US 2003/004663 A1 beschriebene Lösung nur unzulänglich erreicht.

Die Aufgabe der Erfindung besteht somit darin, ein Verfahren und eine Anordnung zur Verteilung der Rechenlast in Datenverarbeitungseinrichtungen bei einer Durchführung von blockbasierten Rechenvorschriften sowie ein entsprechendes Computerprogramm und ein entsprechendes computerlesbares Speichermedium bereitzustellen, welche die oben genannten Mängel beheben und es insbesondere erlauben, die Echtzeitverarbeitung von Audio- und/oder Videodaten zu unterstützen.

Diese Aufgabe wird erfindungsgemäß durch die Merkmale in den Ansprüchen 1 und 7 bis 10 gelöst. Zweckmäßige Ausgestaltungen der Erfindung sind in den Unteransprüchen enthalten.

Ein besonderer Vorteil des erfindungsgemäßen Verfahrens besteht darin, dass eine gleichmäßige Ausnutzung der verfügbaren Prozessorressourcen bei der Durchführung blockbasierter Berechnungsvorschriften realisiert wird. Dies wird dadurch erreicht, indem die Berechnungsvorschrift in mehrere Berechnungsschritte (mindestens zwei) unterteilt wird, welche nacheinander, vorzugsweise in unterschiedlichen Zeitfenstern abgearbeitet werden. Bei blockbasierten Berechnungsvorschriften wird ein in zeitlicher Abfolge einlaufender Datenstrom, wie beispielsweise einlaufende Eingangswerte (z.B. Abtastwerte), zu Blöcken von jeweils N Eingangswerten zusammengefasst. In Abhängigkeit der Berechnungsvorschrift umfasst ein Block weitere Daten, die zur Ausführung der Berechnungsvorschrift erforderlich sind, wie beispielsweise Ergebnisse von Berechnungen in einem oder mehreren vorangehenden Blöcken. Auf die N Eingangswerte eines solchen Blocks wird die Berechnungsvorschrift angewendet. Die Berechnungsvorschrift, welche die Eingangswerte eines Blocks verarbeitet, umfasst eine oder mehrere Operationen, die bei der Abarbeitung der Berechnungsvorschrift auszuführen sind. Bei der Berechnungsvorschrift kann es sich beispielsweise um eine schnelle Faltung, bei den Operationen z. B. um Teilrechenschritte einer Fourier-Transformation, um Teilrechenschritte einer inversen Fourier-Transformation, um Block-Multiplikationen, um Butterfly-Operationen, um komplexe Multiplikationen und/oder um elementare Rechenoperationen wie Addition, Multiplikation, Vorzeichenwechsel o.dgl., handeln. Erfindungsgemäß werden die Operationen zu Berechnungsschritten zusammengefasst. Ein Berechnungsschritt umfast daher solche Operationen (z.B. Teilrechenschritte), die im gleichen Zeitfenster ausgeführt werden. Die Zusammenfassung erfolgt dabei vorteilhafterweise so, dass jeder Berechnungsschritt der Berechnungsvorschrift im Wesentlichen die gleiche Rechenlast erzeugt und damit die gleichen Prozessorressourcen beansprucht. Für eine gleichmäßige Auslastung der Rechenkapazität erweist es sich als vorteilhaft, wenn die Berechnungsschritte gleichmäßig über die Dauer des Einlaufens der N Eingangswerte des nächsten Blocks verteilt werden. Besonders vorteilhaft ist es, wenn die Berechnungsschritte gleichmäßig ohne Unterbrechung über die Dauer des Einlaufens der N Eingangswerte des nächsten Blocks verteilt werden. In einer bevorzugten Ausführungsform der Erfindung ist vorgesehen, dass die Rechenkapazität über die gesamte Zeitdauer zumindest eines Blocks im Wesentlichen gleichmäßig ausgelastet wird. In einer weiteren bevorzugten Ausführungsform ist vorgesehen, dass eine Anzahl von N Berechnungsschritten vorgesehen ist, die im Zeittakt der einlaufenden Eingangswerte abgearbeitet werden. In einer alternativen Ausführungsform kann vorgesehen sein, dass die Berechnungsschritte kleinteiliger realisiert werden, d. h. dass die Berechnungsvorschrift in mehr als N Berechnungsschritte gegliedert wird. Es ist aber auch denkbar, eine Anzahl von Berechnungsschritten vorzusehen, die kleiner als N ist. Erfindungsgemäß kann vorgesehen sein, dass Berechnungsschritte so ausgeführt werden, dass jeder Berechnungsschritt ein möglichst schmales Zeitfenster beansprucht, dabei aber eine hohe Prozessorleistung erfordert, oder aber Berechnungsschritte werden so ausgeführt, dass sie ein breites Zeitfenster beanspruchen, dabei aber eine geringe Prozessorleistung erfordern. Bei der zuerst erwähnten Ausführungsform kann es vorkommen, dass in dem (schmalen) Zeitfenster, in dem der Berechnungsschritt ausgeführt wird, keine oder nur wenige Rechenoperationen anderer Prozesse, die gegebenenfalls neben den blockbasierten Berechnungsvorschriften ausgeführt werden, realisiert werden können, dafür steht aber außerhalb der (schmalen) Zeitfenster für solche Rechenoperationen die gesamte Prozessorleistung zur Verfügung. Bei der zweiten Ausführungsform können zu jeder Zeit Rechenoperationen anderer Prozesse ausgeführt werden, allerdings steht während der (breiten) Zeitfenster, in denen die Berechnungsschritte ausgeführt werden, nicht die gesamte Prozessorleistung zur Verfügung.

Ein weiterer besonderer Vorteil des erfindungsgemäßen Verfahrens besteht darin dass bei Abarbeitung der blockbasierten Berechnungsvorschrift eine im Wesentlichen gleiche Rechenlast erzeugt wird. Vorzugsweise schließt dabei der erste Berechnungsschritt eines nachfolgenden Blocks nahtlos an den letzten Berechnungsschritt des vorangehenden Blocks an. Eine im Wesentlichen gleichmäßige Auslastung der Rechenkapazität während der Abarbeitung eines Blocks oder der Berechnungsvorschrift hat den Vorteil, dass die freien Rechenkapazitäten gut abgeschätzt werden können. Diese Abschätzung ist insbesondere nützlich, wenn die Kapazität einer Recheneinheit für die Umsetzung des Verfahrens dimensioniert werden soll, oder wenn die Recheneinheit neben der durch das beschriebene Verfahren umgesetzten Rechenvorschrift, noch zusätzliche Berechnungen ausführen soll. Störende Lastspitzen, wie sie bei den herkömmlichen Lösungen vorkommen und welche ggf. die Ausführung von solchen zusätzlichen Berechnungen behindern, werden durch die Erfindung vermieden.

Zum Abarbeiten der blockbasierten Berechnungsvorschrift, sieht die Erfindung vor, dass Berechnungszustände, welche die Datenverarbeitungseinrichtung während der Abarbeitung der blockbasierten Berechnungsvorschrift annehmen kann, gespeichert werden. In Abhängigkeit der Zustände erfolgt die Abarbeitung der Berechnungsschritte. Jedem Zustand ist ein Berechnungsschritt zugeordnet. Da die Berechnungsschritte möglicherweise jeweils verschiedene Teilrechenschritte umfassen, wird durch den jeweils aktuellen Zustand angezeigt, welcher Berechnungsschritt ausgeführt werden muss. Der Beginn eines Blockes ist beispielsweise durch den ersten Zustand gekennzeichnet, und entsprechend wird der dem ersten Zustand zugeordnete (erste) Berechnungsschritt ausgeführt. Nach Ausführung des ersten Berechnungsschritts wird der Zustandsspeicher aktualisiert und geht zum zweiten Zustand über, und dementsprechend wird der dem zweiten Zustand zugeordnete (zweite) Berechnungsschritt ausgeführt. So fortschreitend werden alle Berechnungsschritte eines Blocks in Abhängigkeit der jeweils aktuellen Zustände abgearbeitet. Nachdem der letzte Berechnungsschritt eines Blocks abgearbeitet wurde, geht der Zustandsspeicher in einer bevorzugten Ausführungsform wieder in den ersten Zustand über und der erste Berechnungsschritt des nachfolgenden Blocks wird abgearbeitet. Die Abarbeitung der Berechnungsschritte erfolgt also zyklisch.

Als vorteilhaft erweist es sich, dass die Zustände im Takt der einlaufenden Eingangswerte aktualisiert werden. In diesem Falle wird mit jedem einlaufenden Eingangswert ein neuer Berechnungsschritt ausgeführt, der durch den jeweiligen aktuellen Zustandswert gekennzeichnet ist. Dadurch ist die Synchronisierung der Berechnung mit der Ein- und Ausgabe zu jeder Zeit gewährleistet, so dass insbesondere zum Zeitpunkt der Datenausgabe sichergestellt ist, dass die Berechnung der Daten abgeschlossen ist.

Eine bevorzugte Ausführungsform sieht vor, dass die Berechnungsvorschrift eine zeitdiskrete Faltung umfasst. Bei den Operationen, die bei der Abarbeitung einer blockbasierten Berechnungsvorschrift ausgeführt werden, kann es sich beispielsweise um Berechnungsschritte einer Fourier-Transformation, Berechnungsschritte einer inversen Fourier-Transformation, Block-Multiplikationen, Butterfly-Operationen, komplexe Multiplikationen, elementare Rechenoperationen und/oder andere mathematische Operationen handeln.

Eine Anordnung nach der Erfindung weist mindestens einen Chip und/oder Prozessor auf, wobei die Anordnung derart eingerichtet ist, dass ein Verfahren zur Verteilung der Rechenlast in Datenverarbeitungseinrichtungen bei einer Durchführung von blockbasierten Rechenvorschriften ausführbar ist, wobei ein Block eine blockweise vorgebbare Anzahl von in einer zeitlichen Abfolge einlaufenden Eingangswerten erfordert, die in einem Block auszuführenden Operationen der Berechnungsvorschrift in mindestens zwei Berechnungsschritte gegliedert werden und die Berechnungsschritte innerhalb eines Blocks nacheinander abgearbeitet werden.

Ein erfindungsgemäßes Computerprogramm ermöglicht es einer Datenverarbeitungseinrichtung, nachdem es in den Speicher der Datenverarbeitungseinrichtung geladen worden ist, ein Verfahren zur Verteilung der Rechenlast in Datenverarbeitungseinrichtungen bei einer Durchführung von blockbasierten Rechenvorschriften durchzuführen, wobei ein Block eine blockweise vorgebbare Anzahl von in einer zeitlichen Abfolge einlaufenden Eingangswerten erfordert, die in einem Block auszuführenden Operationen der Berechnungsvorschrift in mindestens zwei Berechnungsschritte gegliedert werden und die Berechnungsschritte innerhalb eines Blocks nacheinander abgearbeitet werden.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 8 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Verteilung der Rechenlast in Datenverarbeitungseinrichtungen bei einer Durchführung von blockbasierten Rechenvorschriften durchzuführen, wobei ein Block eine blockweise vorgebbare Anzahl von in einer zeitlichen Abfolge einlaufenden Eingangswerten erfordert, die in einem Block auszuführenden Operationen der Berechnungsvorschrift in mindestens zwei Berechnungsschritte gegliedert werden und die Berechnungsschritte innerhalb eines Blocks nacheinander abgearbeitet werden.

Gegenstand der Erfindung ist somit ein Verfahren, das eine optimale und gleichmäßige Ausnutzung der verfügbaren Rechenkapazität erreicht, indem die Trennung von Ein- und Ausgabephasen und Berechnungsphasen aufgehoben wird. Dazu wird die Berechnungsvorschrift, die in den Berechnungsphasen angewandt wird, in kleinere Berechnungsschritte aufgeteilt. Unter Berechnungsvorschrift wird beispielsweise ein Algorithmus zur Berechnung der schnellen Faltung verstanden, der eine Abfolge von Teilrechenschritten umfasst. Einzelne Teilrechenschritte des Algorithmus werden erfindungsgemäß jeweils zu Berechnungsschritten zusammengefasst. Idealerweise erfolgt die Aufteilung in N Berechnungsschritte, sodass bei einer Blockgröße von N Abtastwerten zum Zeitpunkt jedes hereinkommenden Abtastwertes, der für den nächsten Block gesammelt werden muss, ein Berechnungsschritt für den aktuellen Block ausgeführt werden kann. Das bringt eine Verzögerung des Ausgangssignals um weitere N Abtastwerte, also eine weitere Blocklänge mit sich. Zur optimalen Ausnutzung der verfügbaren Rechenkapazität sind die Berechnungsschritte so zu definieren, dass alle eine annähernd gleiche Rechenlast erzeugen. Das kann am besten erreicht werden, indem die Gesamtrechenvorschrift ggf. bis auf ihre elementaren Rechenoperationen herunter gebrochen wird. Diese derart erzeugten kleinteiligen Teilrechenschritte lassen sich anschließend zu N annähernd gleichmäßigen Berechnungsschritten zusammenfassen.

Da nun zu unterschiedlichen Zeitpunkten unterschiedliche Berechnungsschritte durchgeführt werden müssen, weil die einzelnen Berechnungsschritte möglicherweise verschiedene Teilrechenschritte umfassen, muss die Anordnung, die die Berechnung der Faltung ausführt, über einen internen Zustand verfügen, der in einem Zustandsspeicher abgelegt wird und zur Steuerung der Berechnung herangezogen wird. Ein Zustand ist durch die Teilrechenschritte gekennzeichnet, die in dem jeweiligen zum Zustand gehörigen Berechnungsschritt auszuführen sind. Anhängig von diesem Zustandsspeicher wird in einer bevorzugten Ausführungsform mit jedem Abtastwert, der verarbeitet wird, zusätzlich der Berechnungsschritt ausgeführt, der durch den aktuellen Zustand festgelegt wird. Anschließend wird der Zustandsspeicher aktualisiert, so dass mit der Verarbeitung des nachfolgenden Abtastwertes auch der nachfolgende Berechnungsschritt durchgeführt wird.

Die Erfindung stellt ein neues Verfahren bereit, um FFT-basierte Berechnungen in Echtzeit durchzuführen, wobei eine zumindest im wesentlichen gleiche Verteilung der Rechenlast selbst innerhalb der Bearbeitungszeit der Berechnungsschritte innerhalb eines Blocks erreicht wird.
Das Verfahren ist vorteilhaft einsetzbar beispielsweise bei der Berechnung von Faltungen oder in Vocoder-Systemen.
Erfindungsgemäß wird eine gleichverteilte Rechenbelastung der CPU innerhalb der einzelnen Blöcke erreicht. Wenn eine Verzögerung von N Eingangswerten zugelassen wird, arbeitet das Verfahren wie folgt:
- Empfangen eines ersten Blocks von N Eingangswerten,
- Aufteilen der Anzahl X von Operationen der Berechnungsvorschrift in X/N Berechnungsschritte (Unterschritte),
- Durchführung von X/N Berechnungsschritten, während ein Eingangswert der nachfolgenden Blocks empfangen wird,
- Ausgabe des Ergebnisses der Operationen der Berechnungsvorschrift wenn der N-te Eingangswert des nachfolgenden Blocks empfangen wird.
Während die Lösungen des Standes der Technik lediglich eine über die Blöcke als kleinste Einheit gemittelte gleichmäßige Rechenlast erreicht, ermöglicht es die Erfindung, eine gleichverteilte Rechenlast auch innerhalb eines jeden Blocks bereitzustellen. Dabei werden erfindungsgemäß Lastspitzen innerhalb eines Blocks vermieden. Im Stand der Technik kann demgegenüber die Rechenlast innerhalb eines Blockes sehr ungleichmäßig verteilt sein (vgl. Figuren 1 oder 2).
Die Erfindung soll nachstehend anhand von einem zumindest teilweise in den Figuren dargestellten Ausführungsbeispiel näher erläutert werden. Es zeigen:
- Fig. 1:: eine Verteilung der Rechenlast bei herkömmlichen Lösungen zur Berechnung der Faltung;
- Fig. 2:: eine Verteilung der Rechenlast bei einer Faltung nach dem Stand der Technik;
- Fig. 3:: eine Verteilung der Rechenlast bei einer Aufteilung in Blockoperationen;
- Fig. 4:: eine Darstellung eines Berechnungsschemas einer FFT;
- Fig. 5:: eine Verteilung der Rechenlast bei einer Aufteilung der FFT in Butterfly-Ebenen;
- Fig. 6:: eine Verteilung der Rechenlast bei einer Aufteilung der FFT in Butterfly-Operationen, und Aufteilung der Blockmultiplikation und
- Fig. 7:: eine Verteilung der Rechenlast wie in Figur 6 mit einer weiteren Blockmultiplikation.

Nachfolgend wird die Erfindung beispielhaft an der Berechnungsvorschrift für die schnelle Faltung beschrieben, durch welche Audiosignale verarbeitet werden. Die Erfindung ist jedoch nicht auf die Berechnung der schnellen Faltung beschränkt. Vielmehr ist es möglich, das erfindungsgemäße Verfahren auf andere blockbasierte Berechnungsvorschriften anzuwenden. Eine Optimierung lässt sich beispielsweise auch für eine FFT allein, außerhalb einer schnellen Faltung erreichen, wobei das erfindungsgemäße Verfahren auf die FFT angewendet wird. Alternativ ist das Verfahren auch auf Berechnungsverfahren anwendbar, die keine FFT verwenden. Weiterhin können auch mehrdimensionale Transformationen durch das erfindungsgemäße Verfahren optimiert werden (z.B. für Videobearbeitung in Echtzeit).

Zur Veranschaulichung zeigen die Figuren 2, 3, 5, 6 und 7 die Zerlegung der schnellen Faltung in kleinere Berechnungsschritte für die Blocklänge N=8 und die FFT-Länge sechzehn. Die doppelte FFT-Länge wird für das Overlap-Add- bzw. Overlap-Save-Verfahren benötigt, das bei der Zerlegung des Eingangssignalstroms in kleinere Blöcke Anwendung findet. Die Figuren zeigen auch, wie durch den Takt der Abtastwerte die Zeit 100, in der ein Block ein- und ausgegeben wird, in N Zeitfenster 10 unterteilt wird, die an die Ein- und Ausgabe des jeweiligen Abtastwertes gekoppelt sind.

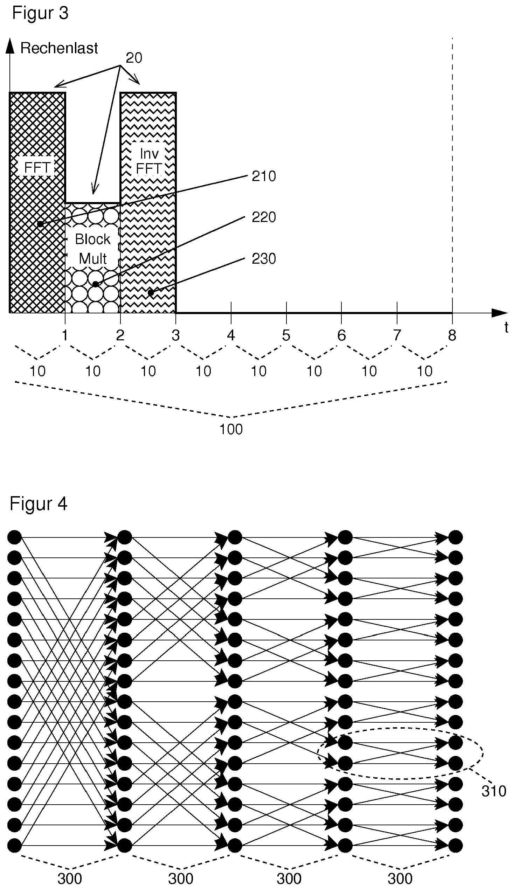

Figur 2 zeigt, wie in einer beispielhaften Umsetzung ohne das beschriebene Verfahren die komplette Berechnung der schnellen Faltung 200 im Zeitfenster des ersten Abtastwertes stattfindet. Der erste Schritt zur Verbesserung der Prozessorauslastung besteht darin, die schnelle Faltung in ihre Blockoperationen schnelle Fourier-Transformation 210, Blockmultiplikation 220 und Rücktransformation 230 zu zerlegen. Figur 3 zeigt, wie damit die Rechenlast in drei Berechnungsschritte 20 zerlegt und so auf drei Zeitfenster verteilt werden kann. Es ist gut zu erkennen, dass eine weitere Aufteilung der drei Berechnungsschritte dazu führen kann, dass eine gleichmäßigere Auslastung erreicht wird.

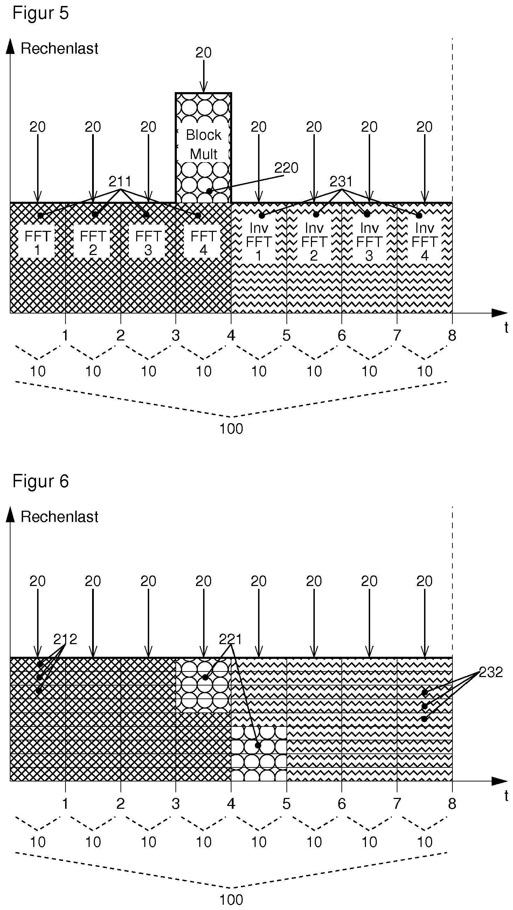

Eine bessere Lastverteilung kann erreicht werden, indem FFT und inverse FFT in kleinere Teilberechnungsschritte zerlegt werden. Figur 4 zeigt das Berechnungsschema der FFT, das aus vier aufeinander folgenden Butterfly-Ebenen 300 mit unterschiedlicher Verschachtelung besteht. Eine Butterfly-Ebene 300 besteht dabei aus acht Butterfly-Operationen 310. Durch getrennte Berechnung der einzelnen Butterfly-Ebenen 300 für die FFT und die inverse FFT in einzelnen Berechnungsschritten 20, lässt sich eine Lastverteilung gemäß Figur 5 erzielen (Transformation 211, Blockmultiplikation 220 und Rücktransformation 231). In dieser Realisierung ist die Berechnungsvorschrift bereits in N Berechnungsschritte 20 aufgeteilt. Die Ausnutzung der Rechenkapazität ist dadurch zwar nun deutlich besser, aber die Blockmultiplikation erzeugt eine kleine Lastspitze. Außerdem nimmt die Anzahl der Butterfly-Ebenen logarithmisch mit der Blockgröße zu, sodass bei größeren Blocklängen weniger Berechnungsschritte 20 als Abtastwerte entstehen, wenn die FFT bzw. inverse FFT für jede Butterfly-Ebene in einem einzigen Teilrechenschritt ausgeführt wird.

Sehr viel feiner lässt sich die Berechnung über die Zeit verteilen, wenn man die FFT und die inverse FFT in ihre einzelnen Butterfly-Operationen 310 aufteilt. In diesem Beispiel bestehen FFT und inverse FFT jeweils aus 32 Butterfly-Operationen 310. Auch die Blockmultiplikation lässt sich feiner aufteilen. In diesem Beispiel beinhaltet sie sechzehn komplexe Multiplikationen, die sich in acht Teilrechenschritte aufteilen lassen, die eine ähnliche Rechenlast erzeugen wie eine Butterfly-Operation 310. Insgesamt ist die schnelle Faltung damit in 72 gleich große Teilrechenschritte zerlegt. Figur 6 zeigt, wie diese zu acht gleich großen Berechnungsschritten 20 zusammengefasst werden können (32 Butterfly-Operationen für die Transformation 212, acht Teilrechenschritte für die Blockmultiplikation 221 und 32 Butterfly-Operationen für die Rücktransformation 232).

Für eine derart aufgeteilte schnelle Faltung besitzt die Anordnung zur Berechnung acht Zustände, die zyklisch durchlaufen werden. Jedem Zustand wird einer der acht Berechnungsschritte zugeordnet. Ein Berechnungsschritt 20 setzt sich somit aus einer bestimmten Anzahl von Teilrechenschritten zusammen. Insbesondere in den Berechnungsschritten 20 im Zeitfenster des vierten und fünften Abtastwertes umfassen die Teilrechenschritte auch unterschiedliche Rechenoperationen: In diesem Ausführungsbeispiel einmal Rechenoperationen zur Ausführung der Transformation 212 und der Blockmultiplikation 221 bzw. Rechenoperationen zur Ausführung der Blockmultiplikation 221 und der Rücktransformation 232.

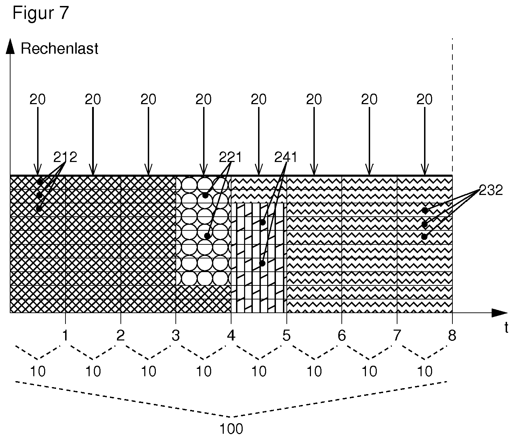

Die Aufteilung in Teilrechenschritte kann theoretisch auch in noch kleinere Operationen bis hin zu den elementaren Grundrechenoperationen erfolgen. Die optimale Aufteilung kann sowohl analytisch (z.B. durch Zählen von Operationen) als auch empirisch (durch Zeitmessungen an einzelnen Teilberechnungen) ermittelt werden. Insbesondere kann das Aufteilungsschema auch Optimierungsaspekte berücksichtigen, indem die Teilrechenschritte und/oder Berechnungsschritte 20 so angelegt sind, dass sie sich möglichst effizient ausführen lassen. Beispielsweise können einzelne Butterfly-Operationen in der Art zu einem Berechnungsschritt 20 zusammengefasst werden, dass die Ausführung auf einem parallelen Rechenwerk begünstigt wird.
Es ist bekannt, dass mehrere aufeinanderfolgende Abschnittsfaltungen gemeinsam jeweils eine FFT und eine inverse FFT benutzen können, wenn die Transformationsergebnisse zwischengespeichert werden. Demnach fällt die volle Rechenlast bestehend aus FFT, Blockmultiplikation und inverser Transformation nur für die erste Abschnittsfaltung an, während sich die nachfolgenden Abschnittsfaltungen auf eine Blockmultiplikation beschränken. Es ist nun durchaus möglich, ein eigenes Aufteilungsschema für die nachfolgenden Abschnittsfaltungen zu definieren, und die Blockmultiplikation in ähnlicher Weise zu zerteilen. Eine andere Möglichkeit besteht darin, die Blockmultiplikationen der nachfolgenden Abschnittsfaltungen in das Verteilungsschema der ersten Abschnittsfaltung mit einzubeziehen. Figur 7 zeigt, wie das Aufteilungsschema für das vorangegangene Beispiel mit einer zusätzlichen Abschnittsfaltung aussehen könnte (32 Butterfly-Operationen für die Transformation 212, acht Teilrechenschritte für die erste Blockmultiplikation 221, acht Teilrechenschritte für die zweite Blockmultiplikation 241 und 32 Butterfly-Operationen für die Rücktransformation 232).
Die Erfindung beschränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren, der erfindungsgemäßen Anordnung, dem erfindungsgemäßen Computerprogramm oder dem erfindungsgemäßen computerlesbaren Speichermedium auch bei grundsätzlich anders gearteten Ausführungen, die jedoch innerhalb des Schutzbereichs der angehängten Ansprüche liegen, Gebrauch machen.

### Bezugszeichenliste

- 10: Zeitfenster
- 20: Berechnungsschritt

- 100: Zeit, in der ein Block ein- und ausgegeben wird
- 200: Berechnung der schnellen Faltung
- 210: schnelle Fourier-Transformation
- 211: Butterfly-Ebene der Transformation
- 212: Butterfly-Operation der Transformation
- 220: Blockmultiplikation
- 221: Teilrechenschritt der Blockmultiplikation
- 230: Rücktransformation
- 231: Butterfly-Ebene der Rücktransformation
- 232: Butterfly-Operation der Rücktransformation
- 241: Teilrechenschritt einer weiteren Blockmultiplikation
- 300: Butterfly-Ebene
- 310: Butterfly-Operationen

## Patentansprüche

1. Verfahren zur Verteilung der Rechenlast in Datenverarbeitungseinrichtungen bei einer Durchführung von blockbasierten Berechnungsvorschriften, wobei ein Block eine blockweise vorgebbare Anzahl von in einer zeitlichen Abfolge einlaufenden Eingangswerten erfordert,
die in einem Block auszuführenden Operationen der Berechnungsvorschrift in mindestens zwei Berechnungsschritte (20) gegliedert werden,
die Berechnungsschritte (20) innerhalb eines Blocks nacheinander abgearbeitet werden und **dadurch gekennzeichnet, dass** alle Berechnungsschritte (20) jeweils eine im Wesentlichen gleiche Rechenlast erzeugen, so dass eine Rechenlast innerhalb eines jeden Blocks gleichverteilt ist, wobei Zustände der Datenverarbeitungseinrichtung definiert und in einem Zustandsspeicher abgelegt werden und die Abarbeitung der Berechnungsschritte in Abhängigkeit der Zustände gesteuert wird.

2. Verfahren nach Anspruch 1 oder 2, **dadurch gekennzeichnet, dass** die Berechnungsschritte im Zeittakt der einlaufenden Eingangswerte abgearbeitet werden.

3. Verfahren nach Anspruch 2, wobei zum Zeitpunkt jedes hereinkommenden Abtastwertes eines zu einem aktuellen Block nachfolgend nächsten Blocks ein Berechnungsschritt für den aktuellen Block ausgeführt wird.

4. Verfahren nach einem der voranstehenden Ansprüche, **dadurch gekennzeichnet, dass** die Berechnungsschritte gleichmäßig ohne Unterbrechung über die Dauer des Einlaufens der Eingangswerte des nächsten Blocks verteilt werden.

5. Verfahren nach einem der voranstehenden Ansprüche, **dadurch gekennzeichnet, dass**
zumindest ein Teil der Operationen zu Teilrechenschritten zusammengefasst wird und zumindest ein Teil der Berechnungsschritte mehrere Teilrechenschritte umfasst.

6. Verfahren nach einem der voranstehenden Ansprüche, **dadurch gekennzeichnet, dass**
die Berechnungsvorschrift die Berechnung einer Faltung umfasst und/oder dass die Operationen Berechnungsschritte einer Fourier-Transformation, Berechnungsschritte einer inversen Fourier-Transformation, Block-Multiplikationen, Butterfly-Operationen, komplexe Multiplikationen, elementare Rechenoperationen und/oder andere mathematische Operationen umfassen.

7. Anordnung mit mindestens einem Chip und/oder Prozessor, wobei die Anordnung derart eingerichtet ist, dass ein Verfahren zur Verteilung der Rechenlast in Datenverarbeitungseinrichtungen gemäß einem der Ansprüche 1 bis 6 ausführbar ist.

8. Computerprogramm, das es einer Datenverarbeitungseinrichtung ermöglicht, nachdem es in Speichermittel der Datenverarbeitungseinrichtung geladen worden ist, ein Verfahren zur Verteilung der Rechenlast in Datenverarbeitungseinrichtungen gemäß einem der Ansprüche 1 bis 6 durchzuführen.

9. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Verteilung der Rechenlast in Datenverarbeitungseinrichtungen gemäß einem der Ansprüche 1 bis 6 durchzuführen.

10. Verfahren, bei dem ein Computerprogramm nach Anspruch 8 aus einem elektronischen Datennetz, wie beispielsweise aus dem Internet, auf eine an das Datennetz angeschlossene Datenverarbeitungseinrichtung heruntergeladen wird.

## Claims

1. A method for distributing CPU load in data processing devices when executing block-based calculation processes, wherein a block requires a number of time-sequential incoming input values which can be predetermined for each block,
the operations of the calculation instruction which are to be carried out in a block are divided into at least two calculation steps (20),
the calculation steps (20) within a block are processed successively and **characterized in that**
all of the calculation steps (20) each produce substantially the same CPU load so that a CPU load is uniformly distributed within each block, wherein statuses of the data processing device are defined and filed in a status memory and the processing of the calculation steps is controlled as a function of the statuses.

2. The method according to Claim 1 or 2, **characterized in that** the calculation steps are processed in the time cycle of the incoming input values.

3. The method according to Claim 2, wherein a calculation step for a current block is carried out at the time of each incoming sampling value for a next block which follows the current block.

4. The method according to any one of the preceding claims, **characterized in that** the calculation steps are uniformly distributed without interruption over the time that the input values for the next block are coming in.

5. The method according to any one of the preceding claims, **characterized in that** at least a part of the operations is pooled into sub-computation steps and at least a part of the calculation steps comprises multiple sub-computation steps.

6. The method according to any one of the preceding claims, **characterized in that**
the calculation instruction comprises the calculation of a convolution and/or the operations comprise calculation steps of a Fourier transformation, calculation steps of an inverse Fourier transformation, block multiplications, butterfly operations, complex multiplications, elementary computation operations and/or other mathematical operations.

7. An arrangement having at least one chip and/or processor, wherein the arrangement is set up such that a method for distributing CPU load in data processing devices according to any one of Claims 1 to 6 can be carried out.

8. A computer program, which makes it possible for a data processing device, after it has been loaded into storage means of the data processing device, to execute a method for distributing CPU load in data processing devices according to any one of Claims 1 to 6.

9. A computer-readable storage medium, on which a program is stored, which makes it possible for a data processing device, after it has been loaded into storage means of the data processing device, to execute a method for distributing the CPU load in data processing devices according to any one of Claims 1 to 6.

10. A method, in which a computer program according to Claim 8 is downloaded from an electronic data network, such as for example from the Internet, onto a data processing device connected to the data network.

## Revendications

1. Procédé de répartition de la charge de calcul dans des dispositifs de traitement de données lors d'une exécution de calculs par blocs, un bloc demandant un nombre, spécifiable par bloc de valeurs, d'entrée entrant dans une séquence temporelle, les opérations du calcul devant être exécutées dans un bloc étant divisées en au moins deux étapes de calcul (20),
les étapes de calcul (20) étant traitées l'une après l'autre au sein d'un bloc et **caractérisé en ce que**
toutes les étapes de calcul (20) génèrent une charge de calcul essentiellement égale, de telle sorte qu'une charge de calcul est répartie de façon égale au sein de chaque bloc, des états du dispositif de traitement de données étant définis et enregistrés dans une mémoire d'état et le traitement des étapes de calcul étant contrôlé en fonction des états.

2. Procédé selon la revendication 1 ou 2, **caractérisé en ce que** les étapes de calcul sont traitées sur la base de la cadence des valeurs d'entrée entrantes.

3. Procédé selon la revendication 2, une étape de calcul étant exécutée pour le bloc actuel, à l'instant de chaque valeur d'échantillonnage entrante d'un bloc subséquent suivant un bloc actuel.

4. Procédé selon l'une quelconque des revendications précédentes, **caractérisé en ce que**
les étapes de calcul sont réparties de façon égale sans interruption, sur la durée de l'entrée des valeurs entrantes du bloc suivant.

5. Procédé selon l'une quelconque des revendications précédentes, **caractérisé en ce qu'**au moins une partie des opérations est regroupée en étapes de calcul partielles et **en ce qu'**au moins une partie des étapes de calcul comprend plusieurs étapes de calcul partielles.

6. Procédé selon l'une quelconque des revendications précédentes, **caractérisé en ce que**
le calcul comprend le calcul d'une convolution et/ou
**en ce que** les opérations comprennent les étapes de calcul d'une transformation de Fourier, les étapes de calcul d'une transformation de Fourier inverse, des multiplications de bloc, des opérations en papillon, des multiplications complexes, des opérations de calcul élémentaires et/ou d'autres opérations mathématiques.

7. Dispositif avec au moins une puce et/ou un processeur, le dispositif étant mis en place de telle sorte qu'un procédé pour la répartition de la charge de calcul dans des dispositif de traitement de données est exécutable selon l'une des revendications 1 à 6.

8. Programme informatique permettant à une installation de traitement des données d'exécuter un procédé pour exécuter un procédé pour la répartition de la charge de calcul dans des dispositifs de traitement de données selon l'une des revendications 1 à 6, après qu'il a été chargé dans des moyens de stockage de l'installation de traitement des données.

9. Support de stockage pouvant être lu par ordinateur, sur lequel un programme est stocké, lequel permet à une installation de traitement des données d'exécuter un procédé pour la répartition de la charge de calcul dans des dispositifs de traitement de données selon l'une des revendications 1 à 6, après qu'il a été chargé dans des moyens de stockage de l'installation de traitement des données.

10. Procédé par lequel un programme informatique selon la revendication 8 est téléchargé, à partir d'un réseau de données électronique, comme Internet, par exemple, sur une installation de traitement des données connectée au réseau de données.
